# EUROPEAN PATENT SPECIFICATION

(11) **EP 3 028 499 B1**
(45) Date of publication and mention of the grant of the patent: **18.07.2018**
(21) Application number: 14832948.5
(22) Date of filing: 25.07.2014
(51) Int. Cl.: H04W 28/20, H04L 29/08, H04W 4/00

(54) **DATA BANDWIDTH MANAGEMENT SYSTEM AND METHOD**
DATENBANDBREITENVERWALTUNGSSYSTEM UND -VERFAHREN
SYSTÈME ET PROCÉDÉ DE GESTION DE BANDE PASSANTE DE DONNÉES

(30) Priority: 29.07.2013 SG 201305747
(43) Date of publication of application: 08.06.2016
(73) Proprietor: Chikka Pte Ltd, Singapore 048621 (SG)
(72) Inventor: MENDIOLA, Dennis, New York, New York 10011 (US); GARROVILLO, Joseph, Michael, C., Muntinlupa City (PH)
(74) Representative: Hess, Peter K. G.
(86) International application number: PCT/SG2014/000350
(87) International publication number: WO 2015/016774

(56) References cited:
- EP-A1- 1 859 585
- WO-A1-2013/002732
- US-A1- 2004 153 545
- US-B1- 7 116 682
- US-B1- 8 270 411

## Description

### FIELD OF THE INVENTION

The present invention relates to a data bandwidth management system and method. The system and method are particularly suited, but not limited to the management and allocation of data bandwidth to mobile prepaid subscribers and will be described in this context.

### BACKGROUND ART

The following discussion of the background to the invention is intended to facilitate an understanding of the present invention only. It should be appreciated that the discussion is not an acknowledgement or admission that any of the material referred to was published, known or part of the common general knowledge of the person skilled in the art in any jurisdiction as at the priority date of the invention.

"Always on" or "24/7" Internet data access is generally available in markets where majority of telecommunication carrier subscribers prefer mobile data post-paid plans. Subscribers of such post-paid plans generally do not mind paying more per month to have unlimited Internet data access or a data usage capped at a large size, for example >2 Gigabytes (GB).

However, providing "always on" Internet or data connection has remained a challenge for telecommunications carriers in markets dominated by users who prefer "prepaid plans" (or "pay-as-you-go" plans). In these markets, users are less willing to pay a relatively larger subscription fee for internet access. Another variation to the pay-per-specified time model may be a daily "always on" access to selected web resources including websites such as Facebook™, Twitter™, and YouTube™.

As cost is an important concern for prepaid plan users, a challenge for telecommunications carriers is to deliver Internet connection at relatively lower "sachet" price points - yet providing prepaid plan users an "always on" experience. While this may be possible for certain client devices (e.g. "feature phones" and Blackberry smartphones) which are efficient in terms of consuming data bandwidth, it is typically difficult to implement such "sachet" price points for more recent smartphones models which allow multiple programs (or more colloquially known as "apps"). These smartphone models require relatively higher data bandwidth. There is thus a need to capture the market of these smartphone users by providing these with certain flexibility in controlling and adjusting their data bandwidth usage so as to implement such "sachet" price points.

Presently, while it is possible for prepaid plan users to control data bandwidth and monitor their bandwidth usage to some extent, known control mechanisms in place are generally between a few fixed bandwidths levels and require conscious manual control by the user of the smartphone.

Document WO 2013 / 002732 A1 describes a system and a method for adjusting the amount of data bandwidth provided to a mobile device. Thereby, a subscriber database maintains details of the subscribers of the telecommunications network, wherein the details merely comprise information such as the Mobile Subscriber Integrated Services Digital Network Number (MSISDN) of each subscriber mobile phone.

Document US 2004 / 0153545 A1 describes a system and method for managing network resources in a distributed networking environment, wherein the system policies that define how network resources are to be used may be centrally defined and tailored to most efficiently achieve underlying goals.

Document EP 1 859 585 A1 describes a mobility manager that is provided in order to control the communications session and more particularly that handover of the mobile node from one access network to another. Thereby, the mobility manager adapts the bandwidth allocated to the mobile nodes, in accordance with a service level to which the mobile nodes have subscribed and an amount of congestion on the access point.

Although such control mechanisms are better than the relatively coarser 'throttle'- 'de-throttle' all-or-nothing approaches (i.e. data access may only be switched from an "all"- maximum data bandwidth, to a "nothing"- no data bandwidth), such control which is typically administered by the service provider, there exist a need to improve such bandwidth control mechanism to provide seamless experience to prepaid subscribers below a certain price point. There also exists a need to provide feedback to users on the suitability of their data service plan usage.

### SUMMARY OF THE INVENTION

The invention is defined by the independent claims.

In accordance with an aspect of the present invention there is a system for managing and allocating data bandwidth to a client device comprising a monitoring and traffic management module disposed within the client device, the monitoring and traffic management module arranged to monitor data usage on the client device; and a data traffic manager operable to allocate data bandwidth to the client device and receive a request from the monitoring and traffic management module; the request comprising an instruction to the data traffic manager to allocate a suitable data bandwidth to the client device depending on data usage.

The monitoring and traffic management module in the client device provides for real time monitoring and more accurate analysis of an individual's data usage profile in order for a service provider to make suitable recommendations and provide an overall seamless experience to the individual.

Preferably the system comprises a default mode wherein the data profile corresponds to a throttled data bandwidth of more than 100 kilobits per second.

Preferably, upon detection by the monitoring and traffic management module that the client device is being started/restarted, recently turned active from an idle mode or experiences a spike in CPU usage, the monitoring and traffic management module is operable to send a request to instruct the data traffic manager to allocate the maximum available data bandwidth to the client device for a pre-determined period of time, after which the data bandwidth allocated to the client device returns to the default mode. Such pre-determined period of time is set to allow for the proper loading/re-loading of various startup services, initial processes and "apps".

In accordance with another aspect of the present invention there is a system for determining a suitable Internet data connection for a pre-paid subscriber comprising a monitoring and traffic management module disposed within a client device of the pre-paid subscriber, the monitoring and traffic management module arranged to determine and analyse the Internet activity of the prepaid subscriber based on the usage of the client device on a real-time basis to generate a user profile; and a data traffic manager comprising a plurality of Internet data connection types; each Internet data connection type comprising at least a prioritized set of web resources; wherein the monitoring and traffic management module is operable to send a request to the data traffic manager; the request comprising an instruction to the data traffic manager to load an Internet data connection type from a plurality of Internet data connection types depending on the user profile of the pre-paid subscriber.

Preferably, the user profile of the prepaid subscriber is maintained on an independent third party server.

Preferably, the set of web resources are prioritized using weights assigned based on the frequency of the web resources visited by the pre-paid subscriber for a pre-determined period of time.

Preferably, the monitoring and traffic management module is operable to continuously monitor the pre-paid subscriber's Internet activity.

Preferably, the monitoring and traffic management module is arranged to provide recommendation on suitable type(s) of data profile based on the user profile.

Preferably, the monitoring and traffic management module is operable to monitor at least one of the following:- operating system activity, central processing usage (CPU), type/quality of data connection, and the actual bandwidth usage of particular processes and apps.

In accordance with a third aspect of the present invention, there is provided a method for managing and allocating data bandwidth to a client device comprising the following steps:-
a. monitoring data usage on the client device by a monitoring and traffic management module disposed within the client device;
b. sending a request from the monitoring and traffic management module to a data traffic manager to allocate data bandwidth to the client device;
c. the request comprising an instruction to the data traffic manager to allocate a suitable data bandwidth to the client device depending on data usage of the client device.

Preferably, the method comprises a default mode wherein the data profile corresponds to a throttled data bandwidth of more than 100 kilobits per second.

Preferably, the monitoring and traffic management module detects that the client device is being started/restarted, recently turned active from an idle mode or experiences a spike in CPU usage and sends a request to instruct the data traffic manager to provide maximum available data bandwidth to the client device for a pre-determined period of time, after which the data bandwidth allocated to the client device returns to the default mode.

In accordance with a fourth aspect of the present invention, there is provided a method for determining a suitable Internet data connection for a pre-paid subscriber comprising:-
a. determining and analyzing Internet activity of the pre-paid subscriber on a real time basis by a monitoring and traffic management module disposed within a client device;
b. generating a user profile based on the usage of the client device to generate a user profile;
c. sending a request from the monitoring and traffic management module to a data traffic manager to allocate data bandwidth to the client device, the data traffic manager comprising a plurality of Internet data connection types, each Internet data connection type comprising at least a prioritized set of web resources;
d. the request comprising an instruction to the data traffic manager to load an Internet data connection type from a plurality of Internet data connection types depending on the user profile of the pre-paid subscriber.

Preferably, the data profile of the pre-paid subscriber is maintained on an independent third party server.

Preferably, the set of web resources are prioritized using weights assigned based on the frequency of the web resources visited by the pre-paid subscriber for a pre-determined period of time.

Preferably, the monitoring and traffic management module further operates to continuously monitor the pre-paid subscriber's Internet activity.

Preferably, the monitoring and traffic management module further provides recommendation on suitable type(s) of data profile based on the user profile.

Preferably, the monitoring and traffic management module further operates to monitor at least one of the following:- operating system activity, CPU usage, type/quality of data connection, and actual bandwidth consumption.

In accordance with a fifth aspect of the present invention, there is a client device installed with software thereon, the software executable to perform any of the method of the third and fourth aspects of the present invention.

### BRIEF DESCRIPTION OF THE DRAWINGS

The present invention will now be described, by way of example only, with reference to the accompanying drawings, in which:

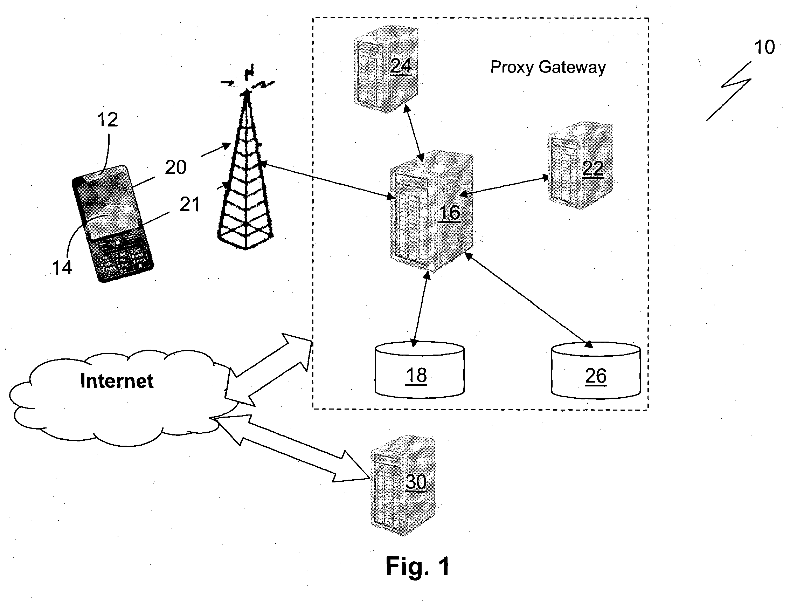

Fig. 1 is a schematic representation of a system in accordance with an embodiment of the present invention; and

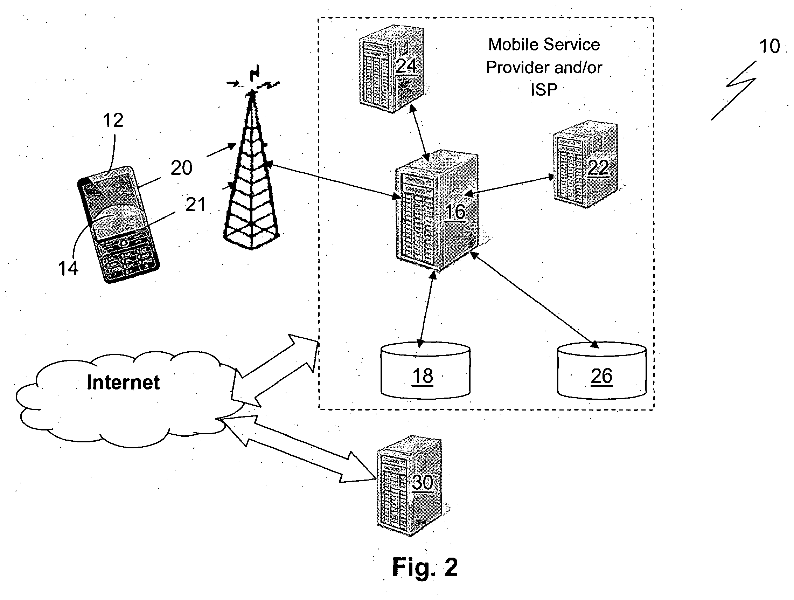

Fig. 2 is a schematic representation of a system in accordance with another embodiment of the present invention.

Other arrangements of the invention are possible and, consequently, the accompanying drawings are not to be understood as superseding the generality of the preceding description of the invention.

### PREFERRED EMBODIMENTS OF THE INVENTION

The inventors had carried out studies on different types of smartphones and realized that different operating system platforms (such as iOS™, Android™) are in-built with different internal network optimization tools. These optimization tools prioritize certain dedicated software applications (colloquially known as 'apps'), data packets, and activities performed by a user over other apps, data packets, and activities depending on factors such as the smartphone's CPU power consumption, bandwidth requirement of certain processes and apps, and/or existing data Internet connection quality (whether via Wi-Fi, LTE, 2G, or 3G etc.). A smartphone operating system will typically provide a coarse form of optimization on usage of the phone's available data bandwidth so as to ensure the best user experience possible. In other words, generally voice calls, push notifications for messaging app will be prioritized over app updates. For such activities considered to be of higher priority, all available bandwidth for the activities will be utilized. However, such type of optimization is generally not suitable for prepaid subscribers who wish to pay less for consuming less bandwidth; because this form of optimization assumes that the maximum allowable bandwidth is offered to the user at most times, e.g., at full 3G or LTE speeds..

Based on certain studies, the inventors further note that the bandwidth usage of a user who performs certain activities including catch-up videos, music streaming, media downloads versus another user who merely surfs, chats and occasionally access social media such as Facebook™, and Twitter™ when tagged or mentioned is about twenty times more. Hence, the present invention should at least segment users between heavy usage category and the casual usage category.

In accordance with an embodiment of the present invention there is a system 10 for managing data bandwidth provided to a client device 12 comprising:-
a monitoring and traffic management module 14 disposed within the client device 12, the monitoring and traffic management module 14 arranged to monitor data usage on the client device 12; and a data traffic manager 16 operable to allocate data bandwidth to the client device 12 and receive a request 20 from the monitoring and traffic management module 14; the request 20 comprising an instruction to the data traffic manager to provide a suitable data bandwidth to the client device 12 depending on the data usage.

The client device 12 may be any computer device capable of accessing Internet (World Wide Web or WWW) via various means including and/or wired data services and wireless services such as but not limited to GPRS, EDGE, 2G, 3G, LTE, 4G, Wi-Fi, etc. The monitoring and traffic management module 14 may be a 'plug and play' device such as a USB dongle or a dedicated software application installable/installed on client device 12. The monitoring and traffic management module 14 may further be integrated within the client device 12 as a hardware or software module.

Monitoring and traffic management module 14 is operable to be in data communication with the data traffic manager 16. Data traffic manager 16 is operable to process requests 20 originating from the monitoring and traffic management module 14 to allocate suitable data bandwidth to the client device 12.

Data traffic manager 16 may be within a proxy gateway server for connection to the Internet. The data traffic manager 16 comprises a bandwidth adjuster 22 and a deep packet inspector 24. Bandwidth adjuster 22 is arranged to receive at least one request 20 for allocating suitable bandwidth to the client device 12 based on the request. Deep packet inspector 24 is arranged to provide periodic or random peeks into the data traffic of client device 12 in order to suitably determine the data profile of the user of the client device 12 based on whether the user of the client device 12 is surfing casually, voice calling over data, messaging, downloading media, peer-to-peer media sharing (torrenting), downloading or updating apps, just to name a few.

The requests 20 are likely via one or more Application Programming Interfaces (or APIs) or similar. The requests 20 are mostly real-time connectivity means. Other forms of connectivity may also be in the form of simple text or Short Messaging Service (SMS), Unstructured Supplementary Service Data (USSD) messages or any other form of an electronic signal/message for such a purpose.

The monitoring and traffic management module 14 is configured or arranged to monitor one or more of the following activities that consume data bandwidth:-
Internet access by software applications in the client device 12;
Operating system processes and activities;
Central Processing Unit (CPU) boot-up and usage; and/or
Quality of data connection (e.g. speed of connection measurable via latency, ping times; whether on EDGE/3G/LTE etc.)

And in cases where allowed by the operating system, actual data bandwidth consumption.

Based on the monitoring of these activities, the monitoring and traffic management module 14 will send requests 20 to data traffic manager 16 based on the following set of rules:-

Maximum bandwidth (de-throttle) to be made available to the client device 12 where one of the following happens:-
- When software application(s) installed on client device 12 that requires heavy refreshing and syncing with cloud-based servers has been activated or just turned active again (after being idle for quite some time);
- When software application(s) installed on client device 12 spikes in terms of CPU usage, suggesting renewed activity or the need for downloading or uploading of heavy files and media.
- When the client device 12 has just been restarted or turned active again after being in idle mode for some time. In such cases, the client device 12 will be refreshing or synchronizing contact details, schedules, tasks and notes. It may also fetch emails, check notifications, etc; and
- When the IP address of the client device 12 has changed. Change in IP address suggests a recently awakened client device 12 or a client device 12 that just got back its Internet connection. In such cases, the client device 12 will be refreshing or synchronizing contact details, schedules, tasks and notes. It may also fetch emails, check notifications, etc.

In addition to sending request 20, the monitoring and traffic management module 14 is operable to be in data communication with the data traffic manager 16 to verify and check the user preference (based on data obtained from the data usage of the user) generated by the deep packet inspector 24 in the event where the deep packet inspector 24 is required. Once verified, the monitoring and traffic management module 14 sends a request 20 to de-throttle (allocate maximum bandwidth), throttle (allocate a pre-determined capped bandwidth), and/or verify the checked user preference back to the data traffic manager 16. Upon receiving the request 20 and upon verification, the data traffic manager 16 may de-throttle (allocate maximum bandwidth), throttle (allocate a pre-determined capped bandwidth), and/or prioritize certain web resources (data packets, URLs etc.) based on the user preference. Each user preference may be stored in a central server 26.

The monitoring and traffic management module 14 may be arranged to provide recommendation on different services, data plan or stock-keeping units deemed suitable for the user of the client device 12 based on the verified user preference. For example, if the monitoring and traffic management module 14 detects frequent video sharing activity, it will recommend a data service that prioritizes such type of usage access to the user, while throttling or de-prioritizing all other traffic, including other media streams, such as those unrelated to the sharing of video.

Recommendations may be in the form of a push alert notification displayed on the screen of the client device 12, such as an alert notification to the user to consider turning off all auto synchronization which may consume unnecessary bandwidth while on a relatively low bandwidth mode (e.g. 3G as opposed to Wi-Fi). Another example may be in the form of displaying an on screen message upon detection by the monitoring and traffic management module 14 that the user is accessing a heavy bandwidth usage activity such as file sharing in a relatively low bandwidth mode which is not recommended.

Examples of different services, data plan or stock-keeping units are as follows:-
a. Full speed Internet (3G, 4G, LTE) at a higher Committed Information Rate (CIM) and an MIR (Maximum Information Rate) at much more than 100 kilobits per second (kbps), and typically in the 1-2 Mbps range for 3G and 5-20 Mbps for LTE connection;
b. Prioritization of data bandwidth or traffic for selected software applications access to the Internet over others if user is deemed to prefer access to these selected software applications over others;
c. Prioritization of data bandwidth or traffic for selected Internet resources, e.g. games over others if user is deemed to prefer access to these Internet resources over others; and
d. Prioritization of data bandwidth or traffic for selected media data type traffic, e.g. voice calls, photo sharing, messaging software applications, notifications over others.

The monitoring and traffic management module 14 is further able to determine the software application(s) activated, the time of day the software application(s) is/are activated, and the frequency of usage of these software application(s). The monitoring and traffic management module 14 is also able to ascertain CPU usage and in certain cases, actual bandwidth consumption.

The invention will now be described in the context of a prepaid subscriber of a telecommunications system 10 having a smartphone 12 as client device, with a monitoring and traffic management 'app' (Traffic App) 14 installed on the smartphone 12.

Upon launching the Traffic App 14, the Traffic App 14 monitors the data usage/activities of the smartphone 12 in the context of the Internet connection and generates a user profile/user preference data based on such activities. The Traffic App 14 also monitors the existing data service plan that the prepaid subscriber has subscribed to and sends an instructing request 20 to the data traffic manager 16 to begin serving this type of plan. For example, if a "Video Sharing Plan" is chosen by the prepaid subscriber, the data traffic manager 16 will proceed to prioritize traffic exchange with certain URLs or IP addresses such as Vine™ or Instagram™ to the subscriber over other activities performed by the subscriber. Once traffic exchange is detected, the Traffic App 14 will alert the data traffic manager 16 via its API connectivity 21 and the data traffic manager 16 will proceed accordingly.

The Traffic App 14 continues to monitor the activities and will make recommendations if the current data plan is not ideal for the type of Internet activity. If required, Deep packet inspector 24 is activated to provide periodic or random peeks into the data traffic of client device 12 although it is to be appreciated that it is the Traffic App 14 which determines and analyses the prepaid subscriber's behaviour and Internet activity generally. This is a conscious choice as a deep packet inspector 24 at the telecommunications network level has limited customization capability and would not approximate the accuracy of analysis capable at the individual client device 12 level. Further, the data traffic manager 16 is generally less adaptive and requires more set-up time to conform to a subscriber's preferred type of service. The data traffic manager 16 also has limited capability, if at all, in profiling every subscriber. A key advantage of the use of Traffic App 14 at the client device 12 level is to minimize dependence on the telecommunications system 10 to do the customization work for its millions of subscribers by placing the burden of analysis and customization on the Traffic App 14. The data traffic manager 16 is arranged to simply take instructions from the Traffic App 14, including throttle, dethrottle, prioritize traffic with certain URLs, deprioritize others, prevent torrenting, etc.

The discussion above explains how based on a specific plan or consumer preference, the Traffic App 14 will prioritize internet traffic. Concurrently, the Traffic App 14 constantly monitors and updates its profile of the prepaid subscriber, learning over time the internet activities (apps and URLs) most important to him. Hence, it is not always necessary for the subscriber to be prompted to make an explicit choice. If for instance the Traffic App 14 notes through learning over time, specific URLs which are important to the subscriber, example, a prepaid subscriber frequently checks his news via Google News, the Traffic App 14 notes the same and when the subscriber visits news.google.com, the Traffic App 14 will prioritize this traffic through known Quality of Service (QOS) techniques.

The Traffic App 14 may optionally take into consideration how much of the implied target megabytes (MB) usage daily a user has consumed, and will then, relax the MIB (de-throttle) for internet activities and URLs important to the subscriber. It constantly calculates usage and check if the telecommunication system 10 target MB usage allowance can accommodate a de-throttling or increase of the MIR. We note that the telecommunications provider or Mobile Network Operator, in order to be profitable, must manage a subscriber's (daily and "peak hour") bandwidth consumption vis-a-vis how much it charges for the data service.

As an optional feature, a subscriber's historical and behavioural profile may be arranged to be kept and maintained by a third party server service provider 30. In such an arrangement, the historical and behavioural profile is not resident at the telecommunications system 10 or the data traffic manager 16. This means that a subscriber can change his account within the telecommunications system 10 (e.g., change mobile-phone MSISDN) and be able to access and restore his original profile if required. A social network account such as Facebook™ or a Gmail™ account may be used as an unifying ID.

A subscriber may have multiple profiles per account. He might like to do this if he has several client devices 12, for instance, an iPhone™, an iPad™, and an Android™device. As each of such client device 12 behaves differently as far as data consumption is concerned, it is therefore important to know the client device 12 being used so that proper recommendations could be made if required.

An added advantage of the approach is that the prepaid subscriber can switch to another telecommunications system, or go on roaming mode, and if that particular telecommunications system is enabled with the present invention or has a data traffic manager compatible with the system 10 of the present invention, the subscriber can use the same profile he has always used.

In another embodiment, where like numerals reference like parts, there is a system 10 for determining a suitable Internet data connection for a prepaid subscriber comprising a monitoring and traffic management module 14 disposed within a client device 12 of the prepaid subscriber, the monitoring and traffic management module 14 arranged to determine and analyse the Internet activity of the pre-paid subscriber on a real-time basis based on the usage of the client device 12 to generate a user profile 18; and a data traffic manager 16 comprising a plurality of Internet data connection types; each Internet data connection type comprising at least a prioritized set of web resources; wherein the monitoring and traffic management module 14 is operable to send a request 20 to the data traffic manager 16; the request 20 comprising an instruction to the data traffic manager 16 to load an Internet data connection type from a plurality of Internet data connection types depending on the user profile 18 of the pre-paid subscriber. The user profile 18 may be generated by using the data obtained to determine user preference as described in the earlier embodiment.

In the embodiment, the system 10 is a mobile network operator or Internet service provider. The Traffic Manager 16 may be within the mobile network operator or Internet service provider.

It is to be understood that the above embodiments have been provided only by way of exemplification of this invention, and that further modifications and improvements thereto, as would be apparent to persons skilled in the relevant art, are deemed to fall within the broad scope and ambit of the present invention described herein. It is further to be understood that features from one or more of the described embodiments may be combined to form further embodiments.

## Claims

1. A system (10) for managing and allocating data bandwidth to a client device (12) comprising:
a monitoring and traffic management module (14) disposed within the client device (12), arranged to monitor data usage on the client device (12); and
a data traffic manager (16) operable to receive a request (20) from the monitoring and traffic management module (14) and allocate a suitable data bandwidth to the client device (12), **characterized in that** the data traffic manager (16) includes a deep packet inspector (24) operable to provide periodic or random peeks into a data traffic of the client device (12) and generate a user preference,
the monitoring and traffic management module (14) is operable to check the generated user preference based on data obtained from the data usage,
the request (20) comprises instructions to the data traffic manager (16) to allocate the suitable data bandwidth to the client device (12) depending on the data usage and to verify the checked user preference, and
the monitoring and traffic management module (14) is further operable to provide a recommendation for the client device (12) to prioritize some web resources related to the verified user preference and de-prioritize other web resources unrelated to the verified user preference.

2. The system (10) according to claim 1, wherein the data traffic manager (16) further comprises a plurality of internet data connection types, and each internet data connection type comprises at least a prioritized set of web resources.

3. The system (10) according to claim 2, wherein the set of web resources are prioritized using weights assigned based on a frequency of the web resources visited by the client device (12) for a pre-determined period of time.

4. The system (10) according to claim 1, wherein the monitoring and traffic management module (14) is further arranged to provide recommendation on different services, data plan or stock-keeping units deemed suitable for the user of the client device based on the verified user preference.

5. The system (10) according to claim 4, wherein the set of web resources are prioritized for selected software applications over others if the client device (12) is deemed to prefer access to these selected software applications over others, or prioritized for selected internet resources over others, if the client device (12) is deemed to prefer access to these internet resources over others, or prioritized for selected media data type traffic over others.

6. The system (10) according to claim 4, wherein upon detection by the monitoring and traffic management module (14) that the client device (12) is being started/restarted, recently turned active from an idle mode or experiences a spike in CPU usage, the monitoring and traffic management module (14) is operable to send the request (20) to instruct the data traffic manager (16) to provide maximum available data bandwidth to the client device (12) for a pre-determined period of time, after which the data bandwidth allocated to the client device (12) returns to the default mode.

7. The system (10) according to claim 3, wherein
the monitoring and traffic management module is arranged to determine and analyse an internet activity of a pre-paid subscriber on a real time basis based on the data usage of the client device to generate a user profile, and
the request (20) comprises an instruction to the data traffic manager (16) to load an internet data connection type from the plurality of internet data connection types depending on the user profile of the pre-paid subscriber.

8. The system (10) according to claim 1, wherein the user preference is stored in a central server (26).

9. A method for managing and allocating data bandwidth to a client device (12) comprising the following steps:
monitoring data usage on the client device (12) by a monitoring and traffic management module (14) disposed within the client device (12);
receiving a request (20) from the monitoring and traffic management module (14) at a data traffic manager (16); and allocating by the data traffic manager (16) a suitable data bandwidth to the client device (12), **characterized by**
providing periodic or random peeks into a data traffic of the client device (12) and generating a user preference by a deep packet inspector (24) included in the data traffic manager (16),
checking, by the monitoring and traffic management module (14), the generated user preference based on data obtained from the data usage,
the request (20) comprises instructions to the data traffic manager (16) to allocate the suitable data bandwidth to the client device (12) depending on the data usage and to verify the checked user preference, and
providing, by the monitoring and traffic management module (14), a recommendation for the client device (12) to prioritize some web resources related to the verified user preference and de-prioritize other web resources unrelated to the verified user preference.

10. The method according to claim 9, wherein the data traffic manager (16) further comprises a plurality of internet data connection types, and
each internet data connection type comprises at least a prioritized set of web resources.

11. The method according to claim 10, wherein the set of web resources are prioritized using weights assigned based on a frequency of the web resources visited by the client device (12) for a pre-determined period of time.

12. The method according to claim 9, wherein the monitoring and traffic management module (14) provides recommendation on different services, data plan or stock-keeping units deemed suitable for the user of the client device based on the verified user preference.

13. The method according to claim 12, wherein the set of web resources are prioritized for selected software applications over others, if the client device (12) is deemed to prefer access to these selected software applications over others, or prioritized for selected internet resources over others, if the client device (12) is deemed to prefer access to these internet resources over others, or prioritized for selected media data type traffic over others.

14. The method according to claim 12, wherein upon detection by the monitoring and traffic management module (14) that the client device (12) is being started/restarted, recently turned active from an idle mode or experiences a spike in CPU usage, the monitoring and traffic management module (14) is operable to send the request (20) to instruct the data traffic manager (16) to provide maximum available data bandwidth to the client device (12) for a pre-determined period of time, after which the data bandwidth allocated to the client device (12) returns to the default mode.

15. The method according to claim 11, wherein the monitoring and traffic management module is arranged to determine and analyze an internet activity of a pre-paid subscriber on a real time basis based on the data usage of the client device to generate a user profile, and the request (20) comprises an instruction to the data traffic manager (16) to load an internet data connection type from the plurality of internet data connection types depending on the user profile of the pre-paid subscriber.

## Patentansprüche

1. System (10) zum Verwalten und Zuweisen einer Datenbandbreite an eine Client-Vorrichtung (12) aufweisend:
ein Überwachungs- und Verkehrsverwaltungsmodul (14), das innerhalb der Client-Vorrichtung (12) angeordnet ist, und das eingerichtet ist, eine Datennutzung auf der Client-Vorrichtung (12) zu überwachen; und
einen Datenverkehrsmanager (16), der in der Lage ist, eine Anfrage (20) von dem Überwachungs- und Verkehrsverwaltungsmodul (14) zu empfangen und eine passende Datenbandbreite an die Client-Vorrichtung (12) zuzuweisen, **dadurch gekennzeichnet, dass**
der Datenverkehrsmanager (16) einen Tief-Paket-Untersucher (24) umfasst, der in der Lage ist, periodische oder zufällige Spitzen in einem Datenverkehr der Client-Vorrichtung (12) bereitzustellen und eine Nutzerpräferenz zu erzeugen, wobei
das Überwachungs- und Verkehrsverwaltungsmodul (14) in der Lage ist, die erzeugte Nutzerpräferenz zu überprüfen, basierend auf Daten, die aus der Datennutzung erhalten wurden, wobei
die Anfrage (20) Anweisungen an den Datenverkehrsmanager (16) aufweist, um die passende Datenbandbreite der Client-Vorrichtung (12) zuzuweisen, in Abhängigkeit von der Datennutzung und um die überprüften Nutzerpräferenzen zu verifizieren, und
das Überwachungs- und Verkehrsverwaltungsmodul (14) ist weiterhin in der Lage, eine Empfehlung für die Client-Vorrichtung (12) bereitzustellen, um einige Webressourcen zu priorisieren, die in Bezug stehen mit den verifizierten Nutzerpräferenzen und um andere Webressourcen zu de-priorisieren, die nicht in Bezug stehen zu den verifizierten Nutzerpräferenzen.

2. System (10) nach Anspruch 1, wobei der Datenverkehrsmanager (16) weiterhin eine Vielzahl von Internetdatenverbindungstypen aufweist, und jeder Internetdatenverbindungstyp zumindest einen priorisierten Satz von Webressourcen aufweist.

3. System (10) nach Anspruch 2, wobei der Satz von Webressourcen priorisiert ist unter Verwendung von Gewichtungen, die zugeordnet wurden, basierend auf einer Häufigkeit mit der die Webressourcen durch die Client-Vorrichtung (12) in einer vorbestimmten Zeitspanne besucht wurden.

4. System (10) nach Anspruch 1, wobei das Überwachungs- und Verkehrsverwaltungsmodul (14) weiterhin eingerichtet ist, um eine Empfehlung für unterschiedliche Services, Datenpläne oder Lagerhaltungseinheiten bereitzustellen, die als geeignet für den Nutzer der Client-Vorrichtung angesehen werden, basierend auf den verifizierten Nutzerpräferenzen.

5. System (10) nach Anspruch 4, wobei der Satz von Webressourcen priorisiert ist für ausgewählte Softwareanwendungen gegenüber anderen, wenn die Client-Vorrichtung (12) angesehen wird als das sie Zugang zu diesen ausgewählten Softwareanwendungen gegenüber anderen bevorzugt, oder priorisiert ist für ausgewählte Internetressourcen gegenüber anderen, wenn die Client-Vorrichtung (12) angesehen wird als das sie Zugang zu diesen Internetressourcen gegenüber anderen bevorzugt, oder priorisiert ist für ausgewählten Mediendatentypenverkehr gegenüber anderem.

6. System (10) nach Anspruch 4, wobei bei der Erkennung durch das Überwachungs- und Verkehrsverwaltungsmodul (14), dass die Client-Vorrichtung (12) gestartet/neu gestartet wurde, kürzlich von einem Ruhezustand in einen aktiven geschaltet wurde oder eine Spitze in der CPU Nutzung festgestellt wurde, ist das Überwachungs- und Verkehrsverwaltungsmodul (14) in der Lage, die Anfrage (20) zu senden, um den Datenverkehrsmanager (16) anzuweisen, eine maximal verfügbare Datenbandbreite an die Client-Vorrichtung (12) für eine vorbestimmte Zeitspanne bereitzustellen, nach welcher die Datenbandbreite, die für die Client-Vorrichtung (12) zugewiesen wurde, in den Standartmodus zurückkehrt.

7. System (10) nach Anspruch 3, wobei das Überwachungs- und Verkehrsverwaltungsmodul eingerichtet ist zum Bestimmen und Analysieren einer Internetaktivität eines Pre-paid Kunden in Echtzeit, basierend auf der Datennutzung der Client-Vorrichtung, um ein Nutzerprofil zu erzeugen, und die Anfrage (20) weist eine Anweisung an den Datenverkehrsmanager (16) auf, einen Internetdatenverbindungstyp von der Vielzahl von Internetdatenverbindungstypen zu laden, in Abhängigkeit des Nutzerprofils des Pre-paid Kunden.

8. System (10) nach Anspruch 1, wobei die Nutzerpräferenz in einem zentralen Server (26) gespeichert ist.

9. Verfahren zum Verwalten und Zuweisen einer Datenbandbreite an eine Client-Vorrichtung (12) aufweisend die folgenden Schritte:
Überwachen einer Datennutzung an der Client-Vorrichtung (12) durch ein Überwachungs- und Verkehrsverwaltungsmodul (14), das innerhalb der Client-Vorrichtung (12) angeordnet ist;
Empfangen einer Anfrage (20) von dem Überwachungs- und Verkehrsverwaltungsmodul (14) an einem Datenverkehrsmanager (16); und
Zuweisen, durch den Datenverkehrsmanager (16), einer geeigneten Datenbandbreite an die Client-Vorrichtung (12), **gekennzeichnet durch**
Bereitstellen von periodischen oder zufälligen Spitzen in einem Datenverkehr der Client-Vorrichtung (12) und Erzeugen einer Nutzerpräferenz durch einen Tief-Paket-Untersucher (24), der in dem Datenverkehrsmanager (16) beinhaltet ist,
Überprüfen, durch das Überwachungs- und Verkehrsverwaltungsmodul (14), der erzeugten Nutzerpräferenz, basierend auf Daten, die aus der Datennutzung erhalten wurden, wobei
die Anfrage (20) Anweisungen an den Datenverkehrsmanager (16) aufweist, um die geeignete Datenbandbreite der Client-Vorrichtung (12) zuzuweisen, in Abhängigkeit von der Datennutzung, und um die überprüften Nutzerpräferenzen zu verifizieren, und
Bereitstellen, durch das Überwachungs- und Verkehrsverwaltungsmodul (14), einer Empfehlung für die Client-Vorrichtung (12) einige Webressourcen zu priorisieren, die in Bezug zu der verifizierten Nutzerpräferenz stehen, und andere Webressourcen zu de-priorisieren, die nicht in Bezug zu der verifizierten Nutzerpräferenz stehen.

10. Verfahren nach Anspruch 9, wobei der Datenverkehrsmanager (16) weiterhin eine Vielzahl von Internetdatenverbindungstypen aufweist, und jeder Internetdatenverbindungstyp zumindest einen priorisierten Satz von Webressourcen aufweist.

11. Verfahren nach Anspruch 10, wobei der Satz von Webressourcen priorisiert ist unter Verwendung von Gewichtungen, die zugeordnet wurden, basierend auf einer Häufigkeit mit der die Webressourcen durch die Client-Vorrichtung (12) in einer vorbestimmten Zeitspanne besucht worden.

12. Verfahren nach Anspruch 9, wobei das Überwachungs- und Verkehrsverwaltungsmodul (14) eine Empfehlung für unterschiedliche Services, Datenpläne oder Lagerhaltungseinheiten bereitstellt, die als geeignet für den Nutzer der Client-Vorrichtung angesehen werden, basierend auf der verifizierten Nutzerpräferenz.

13. Verfahren nach Anspruch 12, wobei der Satz von Webressourcen priorisiert ist für ausgewählte Softwareanwendungen gegenüber anderen, wenn die Client-Vorrichtung (12) angesehen wird als das sie Zugang zu diesen ausgewählten Softwareanwendungen gegenüber anderen bevorzugt, oder priorisiert ist für ausgewählte Internetressourcen gegenüber anderen, wenn die Client-Vorrichtung (12) angesehen wird als das sie Zugang zu diesen Internetressourcen gegenüber anderen bevorzugt, oder priorisiert ist für ausgewählten Mediendatentypenverkehr gegenüber anderem.

14. Verfahren nach Anspruch 12, wobei bei der Erkennung durch das Überwachungs- und Verkehrsverwaltungsmodul (14), dass die Client-Vorrichtung (12) gestartet/neu gestartet wurde, kürzlich von einem Ruhezustand in einen aktiven geschaltet wurde oder eine Spitze in der CPU Nutzung festgestellt wurde, ist das Überwachungs- und Verkehrsverwaltungsmodul (14) in der Lage, die Anfrage (20) zu senden, um den Datenverkehrsmanager (16) anzuweisen, eine maximal verfügbare Datenbandbreite an die Client-Vorrichtung (12) für eine vorbestimmte Zeitspanne bereitzustellen, nach welcher die Datenbandbreite, die für die Client-Vorrichtung (12) zugewiesen wurde, in den Standartmodus zurückkehrt.

15. Verfahren nach Anspruch 11, wobei das Überwachungs- und Verkehrsverwaltungsmodul eingerichtet ist zum Bestimmen und Analysieren einer Internetaktivität eines Pre-paid Kunden in Echtzeit, basierend auf der Datennutzung der Client-Vorrichtung, um ein Nutzerprofil zu erzeugen, und die Anfrage (20) weist eine Anweisung an den Datenverkehrsmanager (16) auf, einen Internetdatenverbindungstyp von der Vielzahl von Internetdatenverbindungstypen zu laden, in Abhängigkeit des Nutzerprofils des Pre-paid Kunden.

## Revendications

1. Un système (10) de gestion et d'allocation de bande passante de données à un dispositif client (12) comprenant :
un module de surveillance et de gestion du trafic (14) disposé à l'intérieur du dispositif client (12), agencé pour surveiller l'usage des données sur le dispositif client (12) ; et
un gestionnaire de trafic de données (16) pouvant être mis en oeuvre pour recevoir une requête (20) en provenance du module de surveillance et de gestion de trafic (14) et allouer une bande passante de données appropriée au dispositif client (12), **caractérisé en ce que** le gestionnaire de trafic de données (16) comprend un inspecteur (24) de paquets en profondeur pouvant être mis en oeuvre pour assurer des inspections périodiques ou aléatoires dans un trafic de données du dispositif client (12) et générer une préférence utilisateur,
le module de surveillance et de gestion du trafic (14) peut être mis en oeuvre pour contrôler la préférence utilisateur générée en fonction de données obtenues à partir de l'usage des données,
la requête (20) comprenant des instructions données au gestionnaire de trafic de données (16) d'allouer la bande passante de données appropriée au dispositif client (12) en fonction de l'usage des données et de vérifier la préférence utilisateur contrôlée, et
le module de surveillance et de gestion du trafic (14) peut être en outre mis en oeuvre pour produire une recommandation destinée au dispositif client (12) de donner la priorité à certaines ressources web en relation avec la préférence utilisateur vérifiée et ne plus donner la priorité à d'autres ressources web qui ne sont pas en relation avec la préférence utilisateur vérifiée.

2. Le système (10) selon la revendication 1, dans lequel le gestionnaire de trafic de données (16) comprend en outre une pluralité de types de connexions de données Internet, et chaque type de connexion de données Internet comprend au moins un ensemble de ressources web auxquelles il a été donné priorité.

3. Le système (10) selon la revendication 2, dans lequel priorité est donnée à l'ensemble de ressources web en utilisant des pondérations attribuées sur la base d'une fréquence des ressources web visitées par le dispositif client (12) pendant un laps de temps prédéterminé.

4. Le système (10) selon la revendication 1, dans lequel le module de surveillance et de gestion du trafic (14) est en outre agencé de manière à produire une recommandation sur différents services, forfaits de données ou unités inventoriées censés convenir à l'utilisateur du dispositif client en fonction de la préférence utilisateur vérifiée.

5. Le système (10) selon la revendication 4, dans lequel, pour l'ensemble de ressources web,
il est donné priorité devant d'autres à des applications logicielles sélectionnées, si le dispositif client (12) est censé préférer accéder à ces applications logicielles sélectionnées avant les autres, ou
il est donnée priorité devant d'autres à des ressources Internet sélectionnées, si le dispositif client (12) est censé préférer accéder à ces ressources Internet devant les autres, ou priorité est donnée devant d'autres à un trafic de type de données de média sélectionné.

6. Le système (10) selon la revendication 4, dans lequel sur détection par le module de surveillance et de gestion de trafic (14) que le dispositif client (12) est en train d'être démarré/redémarré, vient d'être rendu actif à partir d'un mode de sommeil, ou présente un pic d'utilisation CPU, le module de surveillance et de gestion du trafic (14) peut être mis en oeuvre pour envoyer la requête (20) de donner instruction au gestionnaire de trafic de données (16) de procurer au dispositif client (12) la bande passante de données maximale disponible pendant un laps de temps prédéterminé, après quoi la bande passante de données allouée au dispositif client (12) revient au mode par défaut.

7. Le système (10) selon la revendication 3, dans lequel
le module de surveillance et de gestion du trafic est agencé pour déterminer et analyser en temps réel une activité Internet d'un abonné prépayé en fonction de l'usage de données du dispositif client (12) pour générer un profil utilisateur, et
la requête (20) comprend une instruction donnée au gestionnaire de trafic de données (16) de charger un type de connexion de données Internet parmi la pluralité de types de connexion de données Internet selon le profil utilisateur de l'abonné prépayé.

8. Le système (10) selon la revendication 1, dans lequel la préférence utilisateur est stockée dans un serveur central.

9. Un procédé de gestion et d'allocation de bande passante de données à un dispositif client (12), comprenant les étapes suivantes :
la surveillance de l'usage des données sur le dispositif client (12) par un module de surveillance et de gestion de trafic (14) disposé à l'intérieur du dispositif client (12) ;
la réception d'une requête (20) en provenance du module de surveillance et de gestion du trafic (14) au niveau d'un gestionnaire de trafic de données ; et
l'attribution au dispositif client (12) d'une bande passante de appropriée par le gestionnaire de trafic de données (16), **caractérisé par** :
l'exécution d'inspections périodiques ou aléatoires dans un trafic de données du dispositif client (12) et la génération d'une préférence utilisateur par un inspecteur de paquets en profondeur (24) inclus dans le gestionnaire de trafic de données,
le contrôle, par le module de surveillance et de gestion du trafic (14), de la préférence utilisateur générée en fonction de données obtenues à partir de l'usage des données, la requête (20) comprenant des instructions données au gestionnaire de trafic de données (16) d'allouer la bande passante de données appropriée au dispositif client (12) en fonction de l'usage des données et de vérifier la préférence utilisateur contrôlée, et
la production, par le module de surveillance et de gestion du trafic (14), d'une recommandation destinée au dispositif client (12) de donner la priorité à certaines ressources web qui sont en relation à la préférence utilisateur vérifiée et de ne plus donner la priorité à d'autres ressources web qui ne sont pas en relation à la préférence utilisateur vérifiée.

10. Le procédé selon la revendication 9, dans lequel le gestionnaire de trafic de données (16) comprend en outre une pluralité de types de connexions de données Internet, et
chaque type de connexion de données Internet comprend au moins un ensemble de ressources web auxquelles il a été donné priorité.

11. Le procédé selon la revendication 10, dans lequel priorité est donnée à l'ensemble de ressources web en utilisant des pondérations attribuées sur la base d'une fréquence des ressources web visitées par le dispositif client (12) pendant un laps de temps prédéterminé.

12. Le procédé selon la revendication 9, dans lequel le module de surveillance et de gestion du trafic (14) est en outre agencé de manière à produire une recommandation sur différents services, forfaits de données ou unités inventoriées censés convenir à l'utilisateur du dispositif client en fonction de la préférence utilisateur vérifiée.

13. Le procédé selon la revendication 12, dans lequel, pour l'ensemble de ressources web,
il est donné priorité devant d'autres à des applications logicielles sélectionnées, si le dispositif client (12) est censé préférer accéder à ces applications logicielles sélectionnées avant les autres, ou
il est donnée priorité devant d'autres à des ressources Internet sélectionnées, si le dispositif client (12) est censé préférer accéder à ces ressources Internet devant les autres, ou priorité est donnée devant d'autres à un trafic de type de données de média sélectionné.

14. Le procédé selon la revendication 12, dans lequel sur détection par le module de surveillance et de gestion de trafic (14) que le dispositif client (12) est en train d'être démarré/redémarré, vient d'être rendu actif à partir d'un mode de sommeil, ou présente un pic d'utilisation CPU, le module de surveillance et de gestion du trafic (14) peut être mis en oeuvre pour envoyer la requête (20) de donner instruction au gestionnaire de trafic de données (16) de procurer au dispositif client (12) la bande passante de données maximale disponible pendant un laps de temps prédéterminé, après quoi la bande passante de données allouée au dispositif client (12) revient au mode par défaut.

15. Le procédé selon la revendication 11, dans lequel
le module de surveillance et de gestion du trafic est agencé pour déterminer et analyser en temps réel une activité Internet d'un abonné prépayé en fonction de l'usage de données du dispositif client (12) pour générer un profil utilisateur, et la requête (20) comprend une instruction donnée au gestionnaire de trafic de données (16) de charger un type de connexion de données Internet parmi la pluralité de types de connexion de données Internet selon le profil utilisateur de l'abonné prépayé.
